Europäisches Patentamt

European Patent Office

Office européen des brevets

(19)

(11) Veröffentlichungsnummer: **0 170 018**
**B1**

(12) **EUROPÄISCHE PATENTSCHRIFT**

(45) Veröffentlichungstag der Patentschrift: **03.10.90**

(21) Anmeldenummer: **85107387.4**

(22) Anmeldetag: **14.06.85**

(51) Int. Cl.⁵: **F 02 D 31/00, F 02 D 41/16, F 02 D 41/22**

(54) **Verfahren und Vorrichtung zur Eigendiagnose von Stellgliedern.**

(30) Priorität: **03.08.84 DE 3428620**
**27.09.84 DE 3435465**

(43) Veröffentlichungstag der Anmeldung:
**05.02.86 Patentblatt 86/06**

(45) Bekanntmachung des Hinweises auf die Patenterteilung:
**03.10.90 Patentblatt 90/40**

(84) Benannte Vertragsstaaten:
**DE FR GB**

(56) Entgegenhaltungen:
**DE-A-2 846 804**
**GB-A-2 102 165**
**JP-A-57 186 038**
**US-A-4 200 064**
**US-A-4 348 727**
**US-A-4 414 950**

(73) Patentinhaber: **ROBERT BOSCH GMBH**
**Postfach 50**
**D-7000 Stuttgart 1 (DE)**

(72) Erfinder: **Denz, Helmut**
**Rosenbergplatz 2**
**D-7000 Stuttgart 1 (DE)**

Courier Press, Leamington Spa, England.

EP 0 170 018 B1

## Beschreibung

Stand der Technik

Die Erfindung geht aus von einem Verfahren und einer Vorrichtung nach der Gattung des Hauptanspruchs bzw. des ersten Vorrichtungsanspruchs. Auf vielen Gebieten der Technik ist es üblich, bestimmte Größen, Werte oder Positionen durch Regelung oder Steuerung zu bestimmen, inden einem beliebigen Stellglied eine üblicherweise elektrische, einen bestimmten Funktionsverlauf aufweisende Größe von einem Regler zugeführt wird, der bestimmte Eingangssignale aus der ihm zugeordneten Regelstrecke verarbeitet und dash durch seine Stellgliedverstellung erzielte Ergebnis in sein Ansteuerverhalten, nämlich durch Auswertung von ihm gemessenern, entsprechendern Istwertgrößen einbezieht.

Aus der US—A—4 414 950 in bekannt, die Funktionsfähigkeit eines Sensors mittels Plausibilitätsprüfung des Ausganssignals dieses Sensors anhand eines anderen Sensorsignals vorzunehmen, wobei sich diese andere Sensorsignal auf einen anderen Betriebsparameter bezieht und für eine andere Steuer- oder Regelaufgabe verarbeitet wird. So wird in der US—A—4 414 950 vorgeschlagen, die Funktionsfähigkeit eines Drehzahlsensors dadurch zu überprüfen, daß für einen vorgegebenen Betriebspunkt das Drehzahlsignal mit dem Ausgangssignal eines Druckmessers im Ansaugrohr des Brennkraftmaschine verglichen wird und die Funktionsfähigkeit des Drehzahlsensors dann festgestellt wird, wenn zwischen Drehzahlwert und Ansaugdruckwert eine vorgegebene Beziehung erfüllt ist.

Problematisch ist allerdings eine Diagnose des Stellglieds selbst, die durchgeführt werden könnte, ohne daß es in der diesem Stellglied zugeordneten oder von ihm kontrollierten Regelstrecke zu Reaktionen kommt, die nicht gewünscht sind und ohne daß es erforderlich ist, das System stillzulegen bzw. die Stellgliedbewegung durch die Zuordnung dann zusätzlich notwendig werdender Hardware-Komponenten zu erfassen und im Sinne einer Diagnose auszuwerten.

Als bekannt, jedenfalls als verfügbar kann dabei die Maßnahme angesehen werden, eine Stellgleiddiagnose einfach bei stillgelegtem System dadurch durchzuführen, daß man das jeweilige Stellglied, etwa durch Zuführung eines extern erzeugten Signals, betätigt und dann die Stellgliedreaktion einfach visuell oder, wo dies nicht möglich ist, beispielsweise durch Fühlen oder mittels eines Hörtestes feststellt.

Aus der JP—A—57—186038 ist in diesem Zusammenhang bekannt, bei betätigtem Leerlaufschalter durch Überprüfen des momentanen Drezahlsignalwertes mittels einer Logikeinrichtung einen Fehlerzustand des Stellgliedes des Leerlaufsystems zu erkennen.

Die folgenden Ausführungen beziehen sich speziell auf die Gegebenheiten bei der Stellglieddiagnose eines sogenannten Leerlauffüllungs-reglers bei Brennkraftmaschinen, für welche die vorliegende Erfindung in ihrer Anwendung besonders geeignet ist. Es versteht sich aber, daß die Erfindung nicht auf die durch sie möglich gewordene Eigendiagnose des LFR-Stellers bei einer Brennkraftmaschine beschränkt ist, sondern der erfindungsgemäße Rahmen Stellglieddiagnosen bei beliebigen Steuerungs- und Regelungssystemen ermöglicht.

Bleibt man bei dem bevorzugten Anwendungsgebiet im Bereich der Regelung von Brennkraftsmaschinen bzw. der den Betrieb eines Kraftfahrzeugs noch stärker überdeckender Regelungssysteme wie beispielsweise die unter der Bezeichnung Motronic oder L-Jetronic bekannten Systeme, die zum überwiegenden Teil von Mikrorechnern gesteuert sind (µC-gesteuert), dann sind bei solchen Einrichtungen Eigendiagnosen der beteiligten Komponenten in zunehmendem Maße gewünscht und erforderlich. Die Überprüfung der Geber des jeweiligen Systems ist vergleichsweise einfach möglich, da die Gebersignale als Eingangsgrößen im Rechner vorliegen und durch eine entsprechende Subroutine leicht auf Plausibilität überprüft werden können. Die Überprüfung der von den Reglern oder Steuerungen angesteuerten Stellglieder ist jedoch wesentlich aufwendiger, da von den jeweiligen Ausgängen mindestens Rückführungen zum Rechner nötig wären, die eine zusätzliche Hardware-Komponente bedeuten (Verdrahtung), außerdem aber eine mechanische Beschädigung des Stellglieds selbst (beispielsweise ein Verklemmen des LFR-Stellers) gar nicht erkennen lassen.

Es besteht daher Bedarf nach der Möglichkeit, bei Stellgliedern von Steuerungen oder Regelungen eine Eigendiagnose ohne zusätzlichen Hardware-Aufwand durchzuführen, wobei einmal der Normalbetrieb des gesteuerten oder geregelten Systems nicht gestört wird, andererseits aber eine echte, mindestens mittelbar auf die Stellgliedbewegung zurückzuführende Rückmeldung zur Auswertung gelangen kann.

Vorteile der Erfindung

Das erfindungsgemäße Verfahren mit den kennzeichnenden Merkmalen des Hauptanspruchs bzw. die erfindungsgemäße Vorrichtung mit den kennzeichnenden Merkmalen des ersten Vorrichtungsanspruchs haben den Vorteil, daß ohne jeden zusätzlichen Aufwand eine Eigendiagnose von Stellgliedern einschließlich deren mechanischer Funktion möglich ist, wobei keinerlei zusätzliche Hardware-Komponenten benötigt werden und die Diagnose auch, je nach Ausbildung und Integration der beteiligten Systeme, mindestens teilweise durch einen Programmablauf und dem Vergleich gemessener zu gespeicherten Werten in bestimmten Zeitintervallen durchgeführt werden kann, gegebenenfalls von den gleichen Mikroprozessoren oder Kleinrechnern, die für die eigentliche Stellgliedansteuerung im Regelsystem verantwortlich sind.

Die Erfindung ist dabei so ausgelegt, daß sie die Folge einer zur Eigendiagnose vorgenommenen Ansteuerung des Stellgliedes mindestens indirekt erfaßt, und zwar anhand einer Istwertgröße, die für andere Regelzwecke ohnehin durch geeignete Istwertgeber aufbereitet und dem Gesamtsystem zugeführt wird. Angewendet auf das spezielle Ausführungsbeispiel einer Eigendiagnose des Stellgliedes einer Leerlauffüllungsregelung beim Betrieb einer Brennkraftmaschine bedeutet dies, daß als Istwert eine Druckmessung bzw. Luftmengen- oder Luftmassenmessung im Saugrohr der Brennkraftmaschine, auch als Funktion, ausgewertet wird für die zu überprüfende Reaktion des LFR-Stellers, wobei die Regelung, zu welcher der LFR-Steller eine Teilkomponente bildet, auf Luftwerte bezogene Angaben gar nicht benötigt, sondern selbst als Istwert eine Drehzahlgröße benutzt.

Dabei ist die Erfindung in der Lage, nicht nut einen bestimmten Arbeitspunkt des Stellgliedes auf einwandfreie Funktion zu überprüfen, sondern die gesamte Stellervariation abzufahren, über diesen Funktionsverlauf auch mechanische Beschädigungen, etwa ein Verklemmen des Stellers zu erkennen und gleichzeitig Wackelkontakte oder sonstige Störungen im Stellerkreis zu erfassen.

Durch die in den Unteransprüchen aufgeführten Maßnahmen sind vorteilhafte Weiterbildungen und Verbesserungen der Erfindung möglich.

Zeichnung

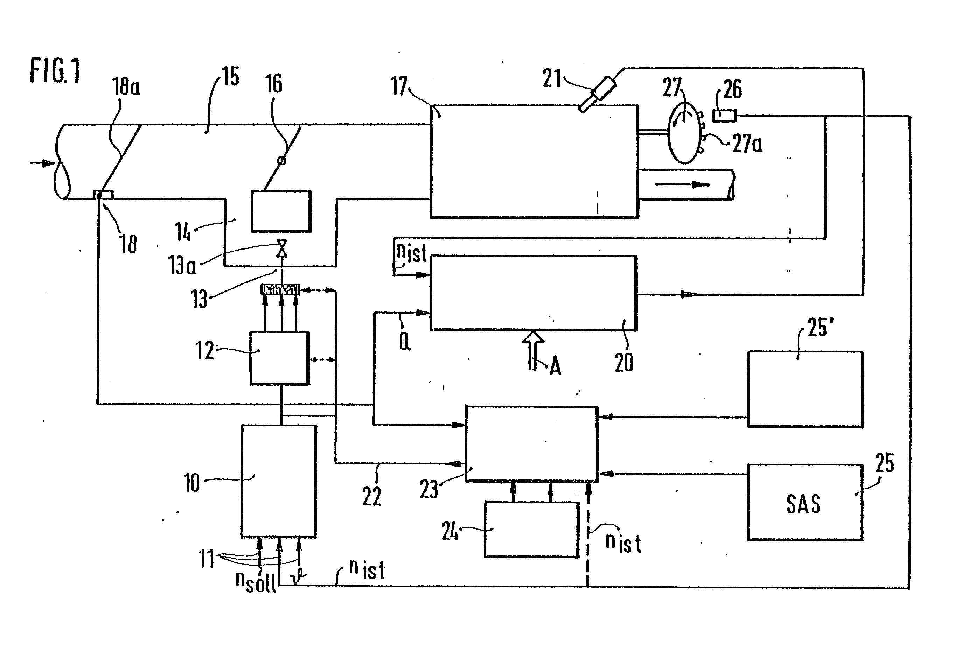

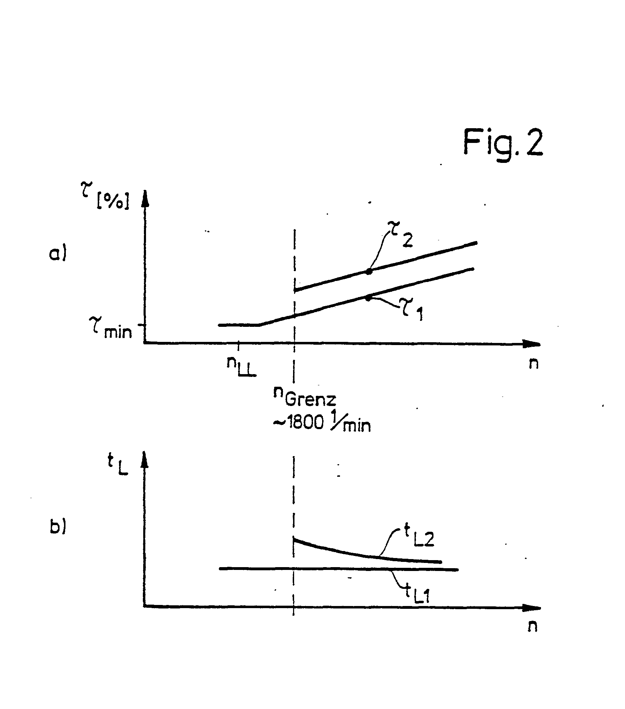

Ein Ausführungsbeispiel der Erfindung ist in der Zeichnung dargestellt und wird in der nachfolgenden Beschreibung näher erläutert. Es zeigen Fig. 1 schematisiert ein mögliches Ausführungsbeispiel einer Schaltung zur Eigendiagnose von Stellgliedern anhand von diskreten Komponenten eines Blockschaltbildes und Fig. 2 Kurvenverläufe der Stelleröffnung in Prozent einer Leerlauffüllungsregelung und auf diese bezogen entsprechende Lastsignale, jeweils über der Drezahl im Schiebebetrieb einer Brennkraftmaschine.

Beschreibung der Ausführungsbeispiele

Der Grundgedanke vorliegender Erfindung besteht darin, bei kombinierten Regel- oder Steuerungssystemen das Stellglied eines bestimmten Regelsystems anzusteuern, und zwar bei solchen Betriebszuständen, bei denen die von diesem Regelsystem beherrschte Regelstrecke keiner oder nahezu keine Reaktionen auf die Stellgliedänderung zeigt, sich also keine entsprechenden, (unerwünschten) Auswirkungen ergeben und insofern auch kein Einfluß auf die Istwertgröße dieses Regelsystems erfolgen kann, dabei aber das Sinal einer anderen Istwertgröße auszuwerten, die zu einem anderen Regelsystem gehört, jedoch mit der von dem betreffenden Stellglied geregelten Größe korreliert ist.

In diesem Zusammenhang sei zunächst darauf hingewiesen, daß die folgenden Erläuterungen der Erfindung diese anhand eines möglichen Ausführungsbeispiels eines Blockschaltbildes angeben, die Erfindung jedoch auf die diskrete Schaltstufendarstellung nicht beschränkt ist, die daher ausschließlich die funktionellen Grundwirkungen der Erfindung veranschaulichen und spezielle Funktionsabläufe in jedenfalls einer möglichen Realisierungsform angeben soll. Es versteht sich, daß die einzelnen Bausteine und Blöcke an analoger, digitaler oder auch hybrider Technik aufgebaut sein können, oder auch, ganz oder teilweise zusammengefaßt, entsprechende Bereich von programmgesteuerten digitalen Systemen, beispielsweise also Mikroprozessoren, Mikrorechner, digitale oder analoge Logikschaltungen o.dgl. umfassen können. Die im folgenden angegebene Beschreibung des bevorzugten Ausführungsbeispiels der Erfindung ist daher bezüglich des funktionellen Gesamt- und Zeitablaufs, der durch die jeweils besprochenen Blöcke erzielten Wirkungsweise und bezüglich des jeweiligen Zusammenwirkens der durch die einzelnen Komponenten dargestellten Teilfunktion(en) zu werten, wobei die Hinweise auf die einzelnen Schaltungsblöcke das Verständis der vorliegenden Erfindung erleichtern. Speziell bezieht sich der Erfindung auf das Anwendungsbeispiel einer Eigendiagnose des Leerlauffüllungsregelungs-Stellers (LFR-Stellers) beim Betrieb einer Brennkraftmaschine, auf die daher im folgenden lediglich noch im einzelnen eingegangen wird.

Das Grundprinzip einer solchen Leerlauffülungsregelung besteht darin, daß dem Regler 10 der Leerlauffüllungsregelung bestimmte Eingangssignale bezüglich eines Drehzahlsollwertes, des Drehzahlistwertes, der Temperatur der Brennkraftmachine u.dgl. zugeführt werden und dieser, ohne zu stark auf Einzelheiten einzugehen, seiner nachgeschalteten Endstufe 12 ein Signal zuführt, so daß diese das eigentliche Stellglied, welches beispielsweise als sogenannter Zweiwicklungs-Drehsteller ausgebildet ist, so ansteuern kann, daß ein zu dem Zweiwicklungs-Drehsteller 13 gehörendes Ventil 13a beispielsweise in einer Luftbypaßleitung 14 zum Ansaugrohr 15 bei im wesentlichen geschlossener Drosselklappe 16 (Leerlauf) die der Brennkraftmaschine 17 zuzuführende Luftmenge so steuert, daß die Istdrehzahl $n_{Ist}$ innerhalb vorgegebener Grenzen gehalten werden kann. Es versteht sich, daß ein solches Ausführungsbeispiel eines Leerlauffüllungsreglers nur eine der möglichen Ausführungsformen darstellt.

Das kombinierte System der gesteuerten Führung und Regelung einer Brennkraftsmaschine 17 umfaßt ferner, neben der insbesondere auch integrierten Leerlauffüllungsregelung, eine elektrische oder elektronische Einspritzregelung und/oder Zündungsregelung, gegebenenfalls noch weitere Regelungssysteme, einschließlich einer Lasterfassung über eine Druckmessung oder eine Luftmengen- oder Luftmassenmessung im Saugrohr 15. Ein solcher Luftmengengeber, wie er im folgenden lediglich noch gennant werden soll, ist in Fig. 1 mit 18 angegeben und kann schematisch eine mechanisch verschwenkbare Stauklappe 18a umfassen, deren Verschwenkwinkel ein Maß für die über das Saugrohr der Brennkraftmaschine zugeführte Luftmenge Q ist. Der Einspritzregler 20 benutzt u.a. dieses Lastsignal Q und eine Drehzahllistsignal $n_{ist}$ und erzeugt an seinem Ausgang Einspritzbefehle, die Kraftstoffeinspritzventilen 21 zugeführt werden. Hierzu kann die Einspritzregelung 20 noch eine Vielzahl anderer, ihr zugeführter Eingangssignale und Betriebszustandssignale verarbeiten, die in Fig. 1 insgesamt durch den Pfeil A gekennzeichnet sind.

Genauer braucht zum Verständis vorliegender Erfindung auf die einzelnen Unterregelsysteme eines kombinierten Gesamtsystems nicht eingegangen zu werden — man erkennt aber, daß eine Überprüfung des LFR-Stellers 13 bis zu seiner mechanischen Funktionsfähigkeit mindestens sehr aufwenig und umständlich ist, da jedenfalls über die vom Ventil 13 jeweils eingenommene Stellung Angaben nicht vorliegen und schon die Rückführung lediglich der elektrischen Ansteuersignale für den LFR-Steller zusätzliche Verdrahtungsmittel (Hardware) erforderlich machen würden.

Hier setzt die Erfindung ein, wobei zunächst Betriebszustände der Brennkraftmaschine ausgesucht werden, in denen der Fahrer im Normalbetrieb des Kraftfahrzeugs selbstverständlich, also bei laufender Brennkraftmaschine und ohne daß die Funktion oder das Systems abegeschaltet sind, keine Betätigung des Gaspedals durchfürt, und in denen ferner eine veränderte Ansteuerung des LFR-Stellers zur Veränderung der von ihm erbrachten Zusatzluftmenge keine unangenehmen oder unerwarteten Auswirkungen auf das Fahr- bzw. Motorverhalten zur Folge hat. In solchen Betriebszuständen wird dann von dem normalen LFR-Stellerwert ausgehend eine Änderung der Stelleröffnung, nämlich durch ein entsprechend unterschiedliches Ansteuersignals, durchgeführt und die durch diese Änderung bewirkte, durch Messung festgestellte Änderung der Luftmenge bzw. -masse oder des gemessenen Saugrohrdrucks überprüft. Es versteht sich, daß die geänderte Stelleransteuerung durch entsprechende Beeinflussung des LFR-Reglers oder seiner Endstufe 12 vorgenommen werden kann, oder daß dem LFR-Steller ein separates Ansteuersignal über eine Verbindungsleitung 22 von einer diskreten Diagnoseschaltung 23 zugeführt wird. Es sei nochmals betont, daß diese Diagnoseschaltung aber auch Teil des Programmablaufs des Mikrorechners, also beispielsweise der µC-gesteuerten Motronic/L-Jetronic-Systeme sein kann.

Als Betriebszustände, die sich für die Diagnoseansteuerung des LFR-Stellers eignen, sind bevorzugt Schiebebetriebszuständende der Brennkraftmaschine mit Schubabschaltung oberhalb einer vorgegebenen Drehzahlschwelle (beispielsweise $n \geq 1800\ \mathrm{min}^{-1}$) geeignet. Wird oberhalb diese Drehzahlschwelle der Steller weiter geöffnet, dann kann gleichzeitig überprüft werden, ob sich hierdurch das vom Geber 18 gemessene Lastsignal ändert, unter Einrichtung eines eventuell stattfindenden Drezahlabfalls. Eine solche Stelleransteuerung macht sich im übrigen im Fahrverhhalten in keiner Weise bemerkbar, da durch die Schubabschaltung die Einspritzung ohnehin unterbrochen ist und sich daher lediglich der Luftdurchsatz durch das Saugrohr 15 und die Brennkraftmaschine 17 ändert.

Bezieht man sich auf das Beispiel eines luftmengenmessenden Systems, dann ergibt sich für eine normale, vorgegebene Stelleröffnung $\tau_1$ in Abhängigkeit zur Drehzahl im Schiebebetrieb entsprechend dem Kurvenverlauf a in Fig. 2 ein Lastsignal

$$t_{L1} = \frac{Q_L\ (\tau_1).}{n \cdot K}$$

Wird nun entsprechend dem Diagnose-Ansteuersignal der Steller kurzzeitig z.B. auf das Tastverhältnis (im Ansteuersignal für den Zweiwicklungs-Drehsteller) $\tau_2$ geöffnet, dann muß sich entsprechend dem Kurvenverlauf des Lastsignals über der Drehzahl bei b) in Fig. 2 dieses Lastsignal auf den Wert $t_{L2}$ vergrößern. Diese sich aus den Diagrammverläufen der Fig. 2 ergebenden Daten können Teil eines zusätzlichen Speichers 24 zur Diagnoseschaltung 23 sein, oder sind an geeigneter Stelle in den Speichermitteln der die Regelsysteme bildenden Mikrorechner oder Mikroprozessoren abgelegt, so daß es möglich ist, die für eine GUT-Bewertung erforderliche Korrelation zwischen Diagnoseansteuerung des Stellers und dem zugeordneten Lastsignal aus den gespeicherten Daten zu entnehmen.

Da nur bei bestimmten Betriebszuständen die Eigendiagnose erfolgen soll, verfügt das spezielle Ausführungsbeispiel der Fig. 1 noch über einen Schubabschaltungs-Erkennungsblock 25 bzw. einen Nachstart-Erkennungsblock 25', auf den gleich noch eingegangen wird. Der Diagnoseschaltung 23 wird also neben der Angabe der von ihr für die Durchführung geeigneten Diagnose des Stellers erforderlichen Betriebszustände vorzugsweise noch ein Istwertsignal der Drehzahl zugeführt, welches ja ebenfalls beim Betrieb einer Brennkraftmaschine vorhanden ist und beispielsweise von einem Geber 26 geliefert wird, der in geeigneter Weise, beispielsweise induktiv oder kapazitiv, bestimmte Markierungen 27a an einer kurbelwellensynchron drehenden Scheibe 27 abtastet.

Je nach Ausmaß der sich ergebenden Scheibebetriebsdrehzahlen und der Dauer des Schiebebetriebs ist es natürlich möglich, die gesamte Stellervariation abzufahren und daher auch den funktionellen Verlauf und das einwandfreie Arbeiten des Stellers bei Änderung der ihm zugeführten Eingangssignale zu überprüfen. Wird eine ganzer Funktionsverlauf in der Stellerposition abgefahren, dann ist es auch möglich, Wackelkontakte, u.dgl. festzustellen, wenn nämlich beispielsweise einer kontinuierlichen Änderung des Stelleransteuersignals oder Diagnosesignals sprunghafte Lastsignaländerungen folgen. Durch die ständig durchgeführte Korrelation des bei einem bestimmten Diagnoseansteuersignals für den Steller zu erwartenden Lastsignals ist eine schnelle und, falls gewünscht, sich bei bestimmten Betriebszuständen stets wiederholende Eigendiagnose des Stellglieds möglich.

Es versteht sich, daß eine solche Eigendiagnose nicht auf den einen Brennkraftsmaschinenbetriebszustand der Schubabschaltung beschränkt zu bleiben braucht — es ist als weiteres Ausführungsbeispiel für eine LFR-Stellerüberprüfung auch möglich, als geeigneten Betriebszustand etwa den Nachstart entsprechend Block 25' in Fig. 1 heranzuziehen. Bei einem Nachstart wird zunächst bei großer, vom LFR-Regler selbst veranlaßter Stelleröffnung eine erhöhte Leerlaufdrehzahl eingestellt. Anschließend wird durch Schließen des Stellers die dazugehörige große Luftmenge abgeregelt, bis sich die jeweils angestrebte Leerlauf-Solldrehzahl einstellt. Unter entsprechender Berücksichtigung der Istdrehzahländerung kann daher ebenfalls die Variation der Luftmenge vom Geber 18 als Folge und korreliert zur Steller-Öffnungsänderung auf Plausibilität in der Diagnoseschaltung 23 überprüft werden.

Im letzteren Fall erfolgt die Einleitung des Diagnosevorgangs zwar ebenfalls durch ein geeignetes Nachstart-Signal; es ist aber nicht die Diagnoseschaltung 23, die dann den LFR-Steller ansteuert, sondern das Ansteuersignal für den LFR-Steller wird diesem und parallel der Diagnoseschaltung 23 oder entsprechenden Bereichen im Mikrorechner zugeführt, der bei Vorliegen des Nachstartsignals gleichzeitig das Lastsignal aus einem anderen Regelkreis als Istwert heranzieht und die ihm zugeführten und/ oder gemessenen Werte oder Funktionsverläufe mit den gespeicherten Zuordnungen vergleicht.

**Patentansprüche**

1. Verfahren zur Überprüfung der Funktionsfähigkeit eines die Luftzufuhr zu einer Brennkraftmaschine eines Kraftfahrzeugs beeinflussenden Stellgliedes eines die Luftzufuhr zur Brennkraftmaschine steuernden Steuer- oder Regelsystems, wobei einer Änderung der das Stellglied ansteuernden elektrischen Stellgröße sowie ein mit der Stellgrößenänderung zusammenhängende Änderung eines Last-Meßwertes erfaßt werden und die Stellgrößenänderung und diese Meßwertänderung mit gespeicherten Werten verglichen und auf Plausibilität geprüft wird, wobei die gespeicherten Werte eine Korrelation der Stellgrößenänderung zu der mit diesel Stellgrößenänderung zusammenhängenden Meßwertänderung enthalten, wobei die Stellgrößenänderung beim Auftreten bestimmter Betriebszustände vorgenommen wird.

2. Verfahren nach Anspruch 1, dadurch gekennzeichnet, daß das Stellglied ein Steller einer Leerlauffüllungsregelung (LFR-Steller) ist und daß als Betriebszustand für den Vergleich der Stellervariation mit dem gemessenen Istwert der Schiebebetrieb des von der Brennkraftmaschine angetriebenen Kraftfahrzeugs mit Schubabschalten oberhalb einer vorgegebenen Drehzahlschwelle (n ≤ 1800 min⁻¹) verwendet wird und das Istsignal das Lastsignal einer Saugrohrdruck-, Luftmengen bzw. -Luftmassenmessung ist, welches für die Bestimmung von Einspritzsteuerbefehlen einer elektronischen Kraftstoffeinspritzanlage erstellt wird.

3. Verfahren nach Anspruch 1 oder 2, dadurch gekennzeichnet, daß die gesamte mögliche Stellervariation in ihrem Funktionsverlauf abgefahren und die entsprechende Änderung des zugeordneten Istwertsignals als Lastsignal erfaßt und mit gespeicherten Funktionsverläufen der gegenseitigen Abhängigkeit zur Plausibilitätskontrolle verglichen werden.

4. Verfahren nach einem der Ansprüche 1 bis 3, dadurch gekennzeichnet, daß das Diagnoseansteuersignal entweder bei Auftreten vorgegebener Betriebszustände (Schiebebetrieb des Kraftfahrzeugs) von dem Diagnoseschaltungsteil (23) veranlaßt oder bei Auftreten anderer, ebenfalls für eine Eigendiagnose des LFR-Stellers geeignete Betriebszustände (Nachstart) in seinem Verlauf ausgewertet und der Plausibilitätsvergleich unter Berücksichtigung des sich ändernden Lastistwerts durchgeführt wird.

5. Verfahren nach einem oder mehreren der Ansprüche 1 bis 4, dadurch gekennzeichnet, daß bei kombinierten Systemen unter Verwendung von Mikroprozessoren oder Mikrorechnern der Eigendiagnosebefehl für die Stellgliedüberprüfung (LFR-Steller) als Teil einer unter diesen Bedigungen angesteuerten Programmschleife definiert ist, wobei dann gleichzeitig der vom Mikrorechner, Mikroprozessor o.dgl. empfangene Istwert der Saugrohrdruck-, Luftmassenoder Luftmengenmessung einbezogen und mit gespeicherten Korrelationen, vorzugsweise Funktionsverläufen unter Einbeziehung auch eines Drehzahlsignals, ausgewertet wird.

6. Vorrichtung zur Durchführung des Verfahrens nach Anspruch 1, mit einem die Luftzufuhr, zu einer Brennkraftmaschine eines Kraftfahrzeugs beeinflussenden Stellglied eines die Luftzufuhr zur Brennkraftmaschine steuernden Steuer- oder Regelsystems mit Mitteln (10), die eine elektrische Stellgröße für das Stellglied bilden, mit Mitteln (23), die beim Auftreten bestimmter Betriebszustände aktiviert werden und eine Änderung der Stellgröße vornehmen, mit Mitteln (18), die einem Last-Meßwert erfassen, mit einem Speicher (24), der den Mitteln (23) zugeordnet ist und der eine Funktionsbeziehung zwischen der Stellgrößenänderung und dem Meßwert ethält, wobei die Mittel (23) einem Plausibilitätsvergleich zwischen Stellgrößenändergung, Meßwert und den gespeicherten Werten durchführen.

7. Vorrichtung nach Anspruch 6 zur Eigendiagnose des als Steller einer Leerlauffüllungsregelung (LFR-Steller) ausgeführten Stellglieds beim Betrieb einer Brennkraftmaschine, mit mindestens einem weiteren Regelkreis zur Bemessung von Kraftstoffeinspritzbefehlen und/oder Zündzeitpunkt, denen ein durch Saugrohrdruck-, Luftmengen- oder Luftmassenmessung gewonnener Lastistwert zugeführt ist, dadurch gekennzeichnet, daß zu vorgegebenen Betriebszuständen, bei denen eine Ansteuerung des LFR-Stellers gegebenenfalls uber die gesamte Variationsbreite keine Auswirkungen auf den Brennkraftmaschinenbetrieb hat, bespielsweise also Schiebebetrieb oder Nachstart, der selbst erzeugte oder erfaßte Velauf des Stelleransteuersignals dadurch mit dem gemessenen Lastsignal in eine Plausilibitätsbeziehung gebracht wird, daß mindestens ein Betriebspunkt, vorzugsweise ein Fünktionsverlauf des LFR-Stelleransteuersignals, in Abhängigkeit zur Drehzahl der Brennkraftmaschine, mit gespeicherten Beziehungswerten verglichen wird.

8. Vorrichtung nach Anspruch 7, dadurch gekennzeichnet, daß ein Vergleichsschaltungsteil (23) zur Eigendiagnose des LFR-Stellers vorgesehen ist, welches über zugeordnete Betriebszustandsblöcke (Schubabschalten 25, Nachstart 25') aktivierbar ist und ein LFR-Stelleransteuersignal erzeugt oder dessen Verlauf erfaßt und mit dem gemessenen Lastsignal durch Vergleich mit in einem Speicher (24) niedergelegten, bekannten Beziehungswerten zwischen diesen beiden Größen eine Plausibilitätskontrolle erstellt.

**Revendications**

1. Procédé pour vérifier l'aptitude au fonctionnement d'un organe de réglage, influençant l'arrivée d'air à un moteur à combustion interne d'un véhicule automobile, d'un système de commande ou de régulation contrôlant l'arrivée d'air à ce moteur à combustion interne, procédé dans lequel une modification de la grandeur électrique de réglage commandant l'organe de réglage, ainsi qu'une modification d'une valeur de mesure de la charge, liée à cette modification de la grandeur électrique de réglage, sont détectées, et la modification de la grandeur de réglage ainsi que cette modification de la valeur de mesure, sont comparées avec des valeurs mémorisées et leur plausibilité est vérifiée, les valeurs mémorisées comprenant und corrélation de la modification de la grandeur de réglage par rapport à la modification de valeur de mesure liée à cette modification de la grandeur de réglage, la modification de la grandeur de réglage s'effectuant lors de l'apparition d'états de fonctionnement déterminés.

2. Procédé selon la revendication 1, caractérisé en ce que l'organe de réglage est un organe de réglage d'une régulation de remplissage au ralenti (organe de réglage LFR) et que, comme état de fonctionnement pour la comparaison de la variation de l'organe de réglage avec la valeur réelle mesurée, on utilise le fonctionnement en poussée du véhicule automobile entraîné par le moteur à combustion interne, avec interruption de la poussée au-dessus d'un seuil de vitesse de rotation prédéfini (n ≥ 1800min_1), et le signal de valeur réelle est le. signal de charge d'un moyen de mesure de la quantité d'air, de la masse d'air ou de la pression dans la tubulure d'aspiration, qui est établi pour la détermination d'ordres de commande de l'injection d'une installation électronique d'injection de carburant.

3. Procédé selon la revendication 1 ou la revendication 2, caractérisé en ce que le déroulement fonctionnel de la variation totale possible de l'organe de réglage a lieu et la modification correspondante du signal de valeur réelle correspondant est détectée en tant que signal de charge et comparée avec les déroulements fonctionnels mémorisés de dépendance réciproque pour le contrôle de plausibilité.

4. Procédé selon une des revendications 1 à 3, caractérisé en ce que le signal de commande du diagnostic est déclenché par la partie de diagnostic (23) du circuit, soit lors de l'apparition d'états de fonctionnement prédéfinis (fonctionnement en poussée du véhicule automobile) ou soit lors de l'apparition d'autres états de fonctionnement (post-démarrage) convenant également pour un auto-diagnostic de l'organe de réglage LFR, puis le déroulement de ce signal est exploité et la comparaison de plausibilité est effectuée en tenant compte de la valeur réelle de charge variable.

5. Procédé selon une ou plusieurs des revendications 1 à 4, caractérisé en ce que, dans des sytèmes combinés avec utilisation de microprocesseurs ou de micro-calculateurs, l'ordre d'auto-diagnostic pour la vérification de l'organe de réglage (organe de réglage LFR) est défini en tant que partie d'une boucle de programmation commandée dans ces conditions, la valeur réelle des mesure de la pression dans la tubulure d'aspiration, de la masse d'air ou de la quantité d'air étant alors introduite et exploitée, avec introduction également d'un signal de vitesse de rotation, avec des corrélations mémorisées, de préférence des déroulements fonctionnels.

6. Dispositif pour la mise en oeuvre du procédé selon la revendication 1, avec un organe de réglage, influençant l'arrivée d'air à un moteur à combustion interne d'un véhicule automobile, d'un système de commande ou de régulation contrôlant l'arrivée d'air à ce moteur à combustion interne, avec des moyens (10) qui forment une grandeur électrique de réglage pour l'organe de réglage, avec des moyens de réglage (23) qui sont activés lors de l'apparition d'états de fonctionnement déterminés et provoquent une modification de la grandeur de réglage, avec des moyens (18) qui appréhendent une valeur de mesure de la charge, avec une mémoire (24) associée aux moyens (23) et qui contient une relation fonctionnelle entre la modification de la grandeur de réglage et la valeur de mesure, les moyens (23) effectuant une comparaison de plausibilité entre la modification de la grandeur de réglage, la valeur de mesure et les valeurs mémorisées.

7. Dispositif selon la revendication 6 pour l'auto-diagnostic de l'organe de réglage, réalisé sous la forme d'un organe de réglage d'une régulation de remplissage au ralenti (organe de réglage LFR), lors du fonctionnement d'un moteur à combustion interne, avec au moins un autre circuit de réglage pour la détermination d'ordres d'injection du carburant, auquel est appliquée une valeur réelle de la charge obtenue par mesure de la pression dans la tubulure d'aspiration, de la quantité d'air ou de la masse d'air, dispositif caractérisé en ce que, pour des états de fonctionnement prédéfinis, dans lesquels une commande de l'organe de réglage LFR, éventuellement par la largeur totale de variation, n'a pas d'effets sur le fonctionnement du moteur à combustion interne, par exemple le fonctionnement en poussée ou le post-démarrage, le déroulement obtenu ou détecté du signal de commande de l'organe de réglage est mis en une relation de plausibilité avec le signal de charge mesuré, de sorte qu'au moins un point de fonctionnement, de préférence un déroulement fonctionnel du signal de commande de l'organe de réglage LFR est comparé avec des valeurs mémorisées de la relation en fonction de la vitesse de rotation du moteur à combustion interne.

8. Dispositif selon la revendication 7, caractérisé en ce qu'une partie du circuit de comparaison (23) est prévue pour l'auto-diagnostic de l'organe de réglage LFR, cette partie de circuit étant susceptible d'être activée par l'intermédiaire de blocs d'état de fonctionnement (arrêt de la poussée 25, post-démarrage 25') qui lui sont associès, et un signal de commande de l'organe de réglage LFR est produit ou bien son déroulement est appréhendé, et avec le signal de charge mesuré, un contrôle de plausibilité est établi par comparaison avec des valeurs connues de relation entre ces deux grandeurs.

**Claims**

1. Method for checking the functional capability of an actuator, influencing the air supply to an internal combustion engine of a motor vehicle, of an open-loop or closed-loop control system controlling the air supply to the internal combustion engine, in which method a change in the electrical control value driving the actuator and a change, associated with the control value change, of a load measurement value are detected and the control value change in this measurement value change is compared with stored values and checked for plausibility, the stored values containing a correlation of the control value change to the measurement value change associated with this control value change, the control value change being carried out when certain operating conditions occur.

2. Method according to Claim 1, characterized in that the actuator is an actuator of an idling charge control unit (idling charge control actuator) and that the overrun operation of the motor vehicle driven by the internal combustion engine with overrun disconnection above a predetermined speed threshold (n ≥ 1800 rpm) is used as the operating condition for comparing the atuator variation with the measured actual value and the actual signal is the load signal of an intake pipe pressure, air volume or air mass measurement which is generated for determining injection control commands of an electronic fuel injection system.

3. Method according to Claim 1 or 2, characterized in that the functional variation of the entire possible actuator variation is run through and the corresponding change of the associated actual value signal is detected as load signal and compared with stored functional variations of the interdependence for the plausibility check.

4. Method according to one of Claims 1 to 3, characterized in that the testing drive signal is produced by the testing circuit section (23) either with the occurrence of predetermined operating conditions (overrun operation of the motor vehicle) or is evaluated in its variation when other operating conditions which are also suitable for a self-testing of the idling charge control actuator occur (post-start) and the plausibility comparison is carried out taking into consideration the changing actual load value.

5. Method according to one or more of Claims 1 to 4, characterized in that in combined systems, using microprocessor or microcomputers, the self-testing command for the actuator checking (idling charge control actuator) is defined as a part of a program loop driven under these conditions, the actual value of the intake pipe pressure, air mass or air volume measurement received by the microcomputer, microprocessor or the like then being included, at the same time, and evaluated with stored correlations, preferably functional variations including also a speed signal.

6. Device for carrying out the method according to Claim 1, comprising an actuator, influencing the air supply to an internal combustion engine of a motor vehicle, of an open-loop or closed-loop control system controlling the air supply to the internal combustion engine with means (10) which form an electrical control value for the actuator, with means (23) which are activated with the occurrence of particular operating conditions and effect a change in the control value, with means (18) which detect a load measurement value, with a store (24) which is associated with the means (23) and which contains a functional relation between the control value change and the measurement value, the means (23) carrying out plausibility comparison between control value change, measurement value and the stored values.

7. Device according to Claim 6, for self-testing of the actuator, which is constructed as actuator of an idling charge control unit (idling charge control actuator), during the operation of an internal combustion engine, having at least one further closed loop control circuit for dimensioning fuel injection commands and/or ignition time, which are supplied with an actual load value obtained by intake pipe pressure, air volume or air mass measurement, characterized in that with predetermined operating conditions in which a driving of the idling charge control actuator, if necessary over the entire range of variation, does not have any effects on the internal combustion engine operation, for example, overrun operation or post-start, the self-generated or detected variation of the actuator control signal is brought into a plausibility relation with the measured load signal by the fact that at least one operating point, preferably a functional variation of the idling charge control actuator drive signal, is compared with stored relation values in dependence of the speed of the internal combustion engine.

8. Device according to Claim 7, characterized in that for the self-testing of the idling charge control actuator a comparison circuit section (23) is provided which can be activated via associated operating state blocks (overrun disconnect 25, post-start 25') and generates an idling charge control actuator drive signal or detects its variation and with the measured load signal generates a plausibility check by comparison with known values of the relation between these two quantities, which values are stored in a store (24).

FIG.1

EP 0 170 018 B1

# Fig.2